(19) **Europäisches Patentamt**

**European Patent Office**

**Office européen des brevets**

(11) **EP 0 704 682 B1**

(12) **EUROPEAN PATENT SPECIFICATION**

(45) Date of publication and mention
of the grant of the patent:
**05.06.2002 Bulletin 2002/23**

(51) Int Cl.⁷: **G01F 1/60**, G01F 1/58,
G01F 1/00, G01F 25/00,
G01F 23/26

(21) Application number: **95116484.7**

(22) Date of filing: **03.09.1992**

(54) **Electromagnetic flowmeter for unfilled fluid flow conduit**

Magnetisch-induktiver Durchflussmesser für Freispiegelflüssigkeitsleitung

Débitmètre électromagnétique pour conduites de liquide partiellement remplies

(84) Designated Contracting States:
**CH DE FR GB LI**

(30) Priority: **03.09.1991 JP 22293991**

(43) Date of publication of application:
**03.04.1996 Bulletin 1996/14**

(62) Document number(s) of the earlier application(s) in
accordance with Art. 76 EPC:
**92918706.0 / 0 557 529**

(73) Proprietor: **Aichi Tokei Denki Co., Ltd.
Nagoya-shi Aichi-Ken 456-91 (JP)**

(72) Inventor: **Yoshida, Yutaka,
2-802, Raionzumansyon
Kaniecho, Ama-gun, Aichi-ken, 497 (JP)**

(74) Representative:
**Blanco White, Henry Nicholas et al
ABEL & IMRAY
20 Red Lion Street
London WC1R 4PQ (GB)**

(56) References cited:
**EP-A- 0 555 493        EP-A- 0 557 529
DE-A- 2 063 792        DE-U- 9 103 046
FR-A- 2 068 824        US-A- 3 991 612**

- **PATENT ABSTRACTS OF JAPAN vol. 9 no. 109
(P-355) ,14 May 1985 & JP-A-59 230115
(YAMATAKE HONEYWELL)**
- **PATENT ABSTRACTS OF JAPAN vol. 14 no. 76
(P-1005) ,13 February 1990 & JP-A-01 292214
(AICHI TOKEI)**

## Description

The present invention relates to an electromagnetic flow-meter for an unfilled fluid flow conduit.

There is known an apparatus which includes coils disposed above and below a flow conduit for detecting on the basis of the outputs of the coils whether the flow conduit is completely filled or unfilled, i.e., not completely but only partially filled, with a fluid (JP-A-59-230115).

Further, an arrangement in which the coils disposed above and below a flow conduit are connected in series to each other is disclosed in JP-A-52-48356.

DE-U-9103046 discloses an electromagnetic liquid flow measuring system which, by means of a suitable timing sequence, is capable of detecting unbalanced voltage generation which occurs when a tube element through which the liquid flows is not completely filled by the liquid and of making a correction in order to provide an output signal proportional to the flow rate and, besides a standard pair of electrodes for detecting voltage generation, includes a pair of electrodes exclusively for use when the tube element is less than half-filled with liquid.

The present invention provides an electromagnetic flow-meter for measuring a flow rate of a fluid not completely filling a conduit, comprising:

  coils for mounting above and below the conduit each for generating a magnetic field across the conduit,
  means for energising either the upper coil or the lower coil,
  sensor means comprising a pair of electrodes for being so positioned on the conduit as to be capable of sensing an induced voltage across the conduit caused by the passage of fluid in the conduit through the magnetic field and processing means capable of:

    receiving signals OA' and OB' from the sensor means positioned on the conduit on energisation of the upper coil and the lower coil, respectively, for an unknown flow rate Q' of fluid in the conduit,
    determining the value of the signal $OA_\alpha$ from the sensor means and of the flow rate $Q_\alpha$, respectively, for the point $\alpha$ at which the ratio of OB to OA equals the ratio of OB' to OA', where OA and OB represent previously determined corresponding values for the outputs of the sensor means, on energisation of the upper coil and the lower coil, respectively, when positioned on a reference conduit having a known constant-gradient and the same cross-sectional configuration as the conduit, over a range of known flow rates Q of fluid in the reference conduit and

determining, from OA', $OA_\alpha$ and $Q_\alpha$, the unknown flow rate Q' as equal to OA'. $Q_\alpha/OA_\alpha$.

Preferably, the processing means includes an analogue-to-digital (A/D) converter so positioned as to receive the signals from the sensor means.

Preferably, the processing means is capable of determining the ratio $OA_\alpha/Q_\alpha$ as a sensitivity value.

Preferably, the sensor means includes a pair of electrodes capable of being so positioned on the conduit as to be symmetrically positioned in relation to a centre line of the conduit.

In one form of the flow meter, the upper coil, the lower coil and the sensor means comprising a pair of electrodes are mounted on a length of conduit.

The invention provides a method of measuring the flow rate of a fluid not completely filling a conduit using an electromagnetic flowmeter comprising:

  coils for mounting above and below the measuring conduit each for generating a magnetic field across the conduit,
  means for energising either the upper coil or the lower coil,
  sensor means comprising a pair of electrodes capable of being so positioned on the conduit as to sense an induced voltage across the measuring conduit caused by the passage of fluid in the conduit through the magnetic field and
  processing means performing the steps of:

    receiving signals OA' and OB' from the sensor means positioned on the conduit on energisation of the upper coil and the lower coil, respectively, for an unknown flow rate Q' of fluid in the conduit,
    determining the value of the signal $OA_\alpha$ from the sensor means and of the flow rate $Q_\alpha$, respectively, for the point $\alpha$ at which the ratio of OB to OA equals the ratio of OB' to OA', where OA and OB represent previously determined corresponding values for the output of the sensor means, on energisation of the upper coil and the lower coil, respectively, when positioned on a reference conduit having a known constant-gradient and the same cross-sectional configuration as the conduit (1), over a range of known flow rates Q of fluid in the reference conduit and
    determining, from OA', $OA_\alpha$ and $Q_\alpha$, the unknown flow rate Q' as equal to OA' . $Q_\alpha/OA_\alpha$.

Preferably, the processing means subjects the signals from the sensor means to analogue-to-digital conversion.

Preferably, the processing means determines the ratio $OA_\alpha/Q_\alpha$ as a sensitivity value.

A basic form of an electromagnetic flow-meter, a form of an electromagnetic flowmeter which includes components for conductivity measurement and a method of measuring the flow rate of a liquid not completely filling a conduit using an electromagnetic flow-meter will now be described, by way of example only, with reference to the accompanying drawings in which:

Figure 1 (a) is a block diagram showing a form of an electromagnetic flow-meter which includes components for conductivity measurement,
Figure 1 (b) shows components of the electromagnetic flow-meter of Figure 1 (a) for conductivity measurement,
Figure 2 is a timing chart relevant to Figure 1 (a),
Figure 3 shows a curve for a ratio p, as defined below, on a (h-c) plane, where h and c are as defined below,
Figure 4 shows a curve of a ratio s, as defined below, on the (h-c) plane,
Figure 5 shows the curve p and the curve s on the (h-c) plane,
Figure 6 shows an electric circuit for conductivity measurement in the electromagnetic flow-meter of Figure 1 (a),
Figure 7 shows another electric circuit for conductivity measurement in the electromagnetic flow-meter of Figure 1 (a),
Figure 8 shows a curve for the ratio p on the (h-c) plane for the electromagnetic flow-meter of Figure 1 (a),
Figure 9 shows a curve the ratio s on the (h-c) plane for the electromagnetic flow-meter of Figure 1 (a),
Figure 10 shows an instrumentation-attributable error curve for an exemplary prior art technique of measuring flow rate,
Figure 11 shows an instrumentation-attributable error curve for the electromagnetic flow-meter of Figure 1 (a),
Figure 12 is a block diagram showing a basic form of an electromagnetic flowmeter in accordance with the invention,
Figure 13 (a) shows a side view of a conduit and coils included in the electromagnetic flow-meter of Figure 12,
Figure 13 (b) shows a sectional view of the conduit and coils along the line A-A of Figure 13 (a),
Figure 14 is a timing chart for illustrating the operation of the electromagnetic flow-meter shown in Figure 12,
Figure 15 (a) to Figure 15 (d) are views graphically illustrating the procedures for carrying out a flow rate measuring method by means of the basic form of flow-meter in accordance with the invention, wherein Figure 15 (a) graphically shows the flow-meter output, Figure 15 (b) graphically shows an output ratio for the flow-meter, Figure 15 (c) illustrates the determination of a flow rate $Q_\alpha$ on the basis of an output ratio obtained for an unknown flow rate and Figure 15 (d) illustrates a procedure for determining sensitivity from a curve for an output OA,
Figure 16 is a schematic view of an experimental apparatus used in verifying the measurement accuracy of the technique illustrated in Figures 15 (a) to 15 (d),
Figure 17 shows graphically, by way of example, the relationship between an actual flow rate Q and the outputs OA and OB of the electromagnetic flowmeter shown in Fig. 12,
Figure 18 shows graphically the relationship between an actual flow rate Q and the ratio OB/OA arithmetically determined from the data of Figure 17,
Figure 19 shows graphically the relationships corresponding to those of Figure 17 for a case where the slope of the flow pipe differs from that of Figure 17,
Figure 20 shows an instrument-attributable error diagram for the apparatus shown in Figure 12,
Figure 21 is a flow chart illustrating a method for using the form of electromagnetic flow-meter of Figure 1 (a) including the components for conductivity measurement and
Figure 22 illustrates graphically the relationships among g, as defined below, h and c.

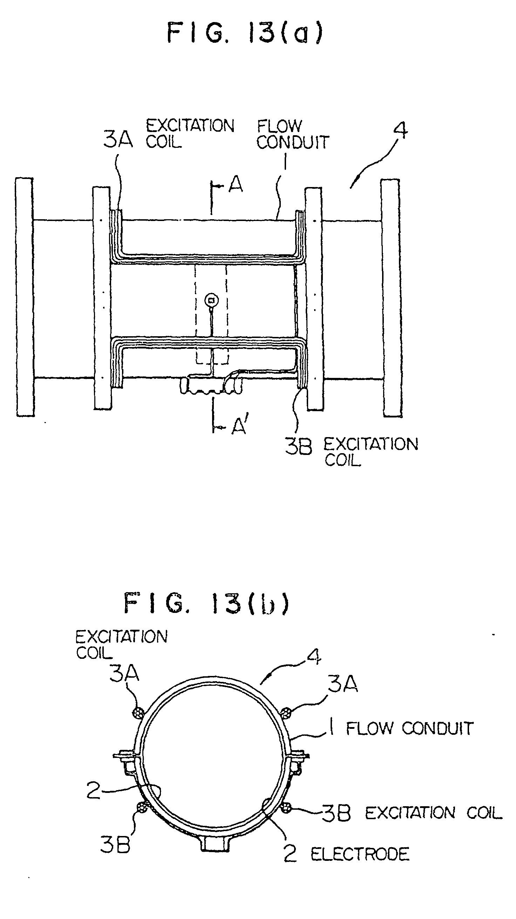

In Figures 12 and 13, a numeral 1 denotes a flow conduit having a circular cross-section, 2; 2 denote a pair of electrodes disposed at positions symmetrical to a vertical line extending through the center of the flow conduit 1, and 3A and 3B denote first and second excitation coils for generating magnetic flux density distributions BA and BB differing from each other for different periods (or times). A reference symbol 4 designates generally a flow rate detector of the illustrated structure.
A numeral 5 denotes an excitation circuit which responds to a signal outputted from a timing circuit 6 to excite the first and second excitation coils 3A and 3B alternately with each other. A numeral 7 denotes a preamplifier for amplifying a voltage making appearance across the electrodes 2;2, a symbol $S_1$ denotes a change-over switch which operates in response to the signal supplied from the timing circuit 6 to change over the paired excitation coils 3A and 3B mentioned above in synchronism with the change-over of the aforementioned excitation periods. More specifically, the switch $S_1$ is changed-over to a contact a when the first excitation coil 3A is excited, while being changed over to a contact b when the second excitation coil 3B is excited.
Reference symbols 8A and 8B denote amplifiers which are supplied with signals via the contact a and the contact b, respectively, and serve for an offset compensation and a sample and hold function of these signals, a numeral 9 denotes a CPU circuit, a numeral 10 denotes an A/D conversion circuit for converting the analogue signals supplied from the amplifiers 8A; 8B to digital signals, and a numeral 11 denotes an arithmetic circuit incorporating a program for performing arithmetic operations which will be described later on. A reference numeral 12 denotes an output terminal for outputting a flow rate signal generated as a result of the arithmetic operation.

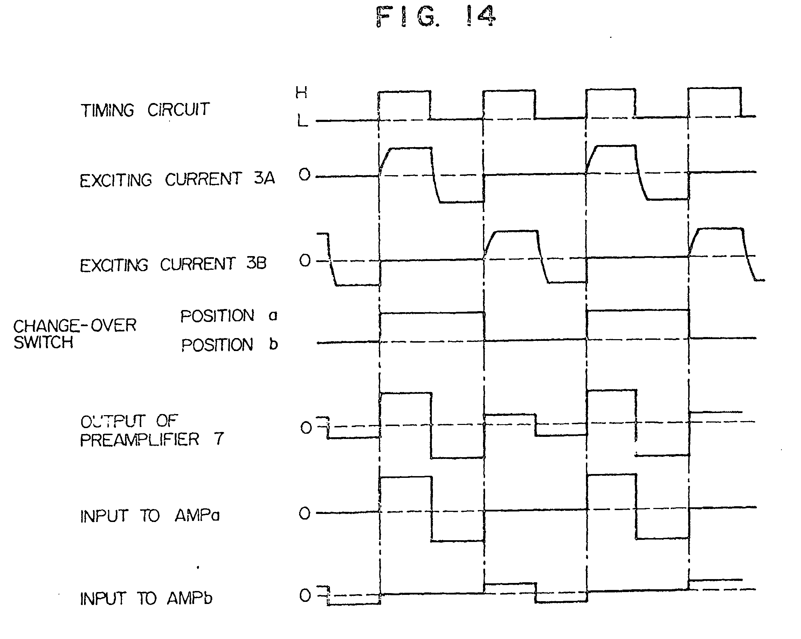

Figure 14 is a timing chart for illustrating op ration of the electromagnetic flowmeter of the structure shown in Figure 12 and shows from the top of the figure an output signal of the timing circuit 5, an exciting current for the first excitation coil 3A, an exciting current for the second excitation coil 3B, operation of the change-over switch $S_1$, an output signal of the preamplifier 7, an input signal to the amplification circuit 8A and an input signal to the amplification circuit 8B, respectively, in this order.

For measuring a flow rate of a fluid flowing through the flow conduit 1 in an unfilled state, such a procedure is adopted which is described below.

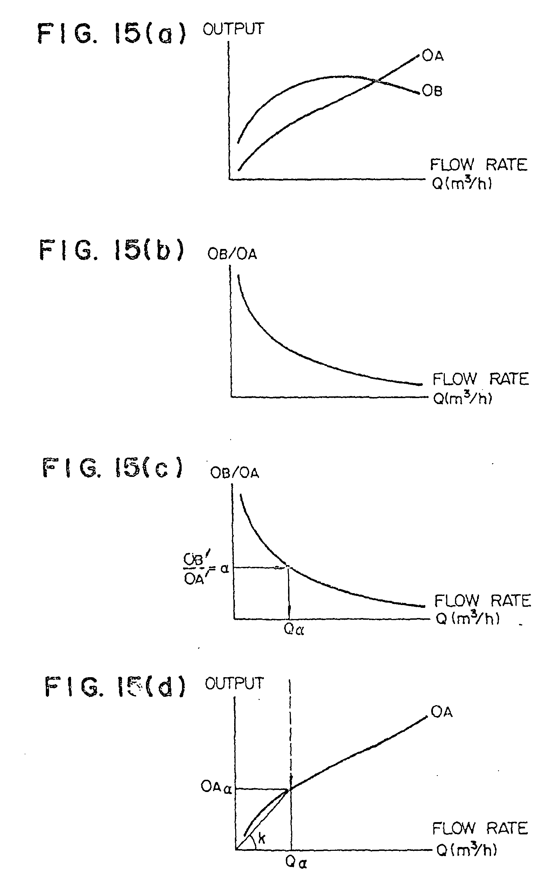

Step 1. A flow conduit having the same cross-sectional shape as the flow conduit 1 for which the flow rate is to be measured is provided. By changing a fluid level h within the first mentioned flow conduit while maintaining constant the slope thereof, output signals OA and OB corresponding to flow rates Q at the above-mentioned fluid levels are previously determined. In one and the same flow conduit, the fluid level and the flow rate bear a one-to-one correspondence to each other. Parenthetically, the output signals OA and OB represent flow rate signals generated by the first and second excitation coils 3A and 3B, respectively, when the same flow rate Q is measured by using the flow rate detector 4 operating in accordance with the principle underlying the electromagnetic flowmeter (Fig 15(a)).

Step 2. Unknown flow rate Q' in the flow conduit 1 through which a fluid whose flow rate is to be measured is flowing is measured by means of the aforementioned flow detector 4 to obtain output data OA' and OB'.

Step 3. A ratio OB'/OA' between the outputs OB' and OA' is determined, and then a flow rate $Q\alpha$ for which a ratio OB/OA between the outputs OB and OA determined in the step 1 assumes the same value as the ratio OB'/OA' is retrieved from the data obtained in the step 1 (Figure 15(b)(c)), whereon a sensitivity given by $OA_\alpha/Q_\alpha$ in the state where the flow rate in the step 1 is $Q\alpha$ is arithmetically determined from the output data signal $OA_\alpha$ acquired in the step 1 when the flow rate is $Q\alpha$ (Figure 15(d)).

Step 4. On the basis of the output OA' measured in the step 2 and the sensitivity $OA_\alpha/Q_\alpha$ determined in the step 3, the unknown flow rate Q' is arithmetically determined in accordance with the following expression:

$$Q' = OA' \cdot Q_\alpha/OA_\alpha$$

As will now be appreciated, there has been proposed a method of determining an unknown flow rate Q' without the need to detect the fluid level.

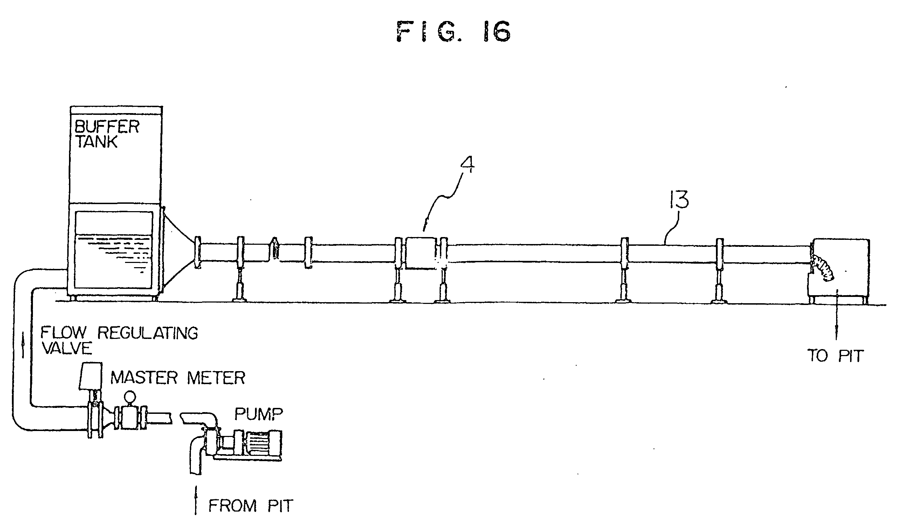

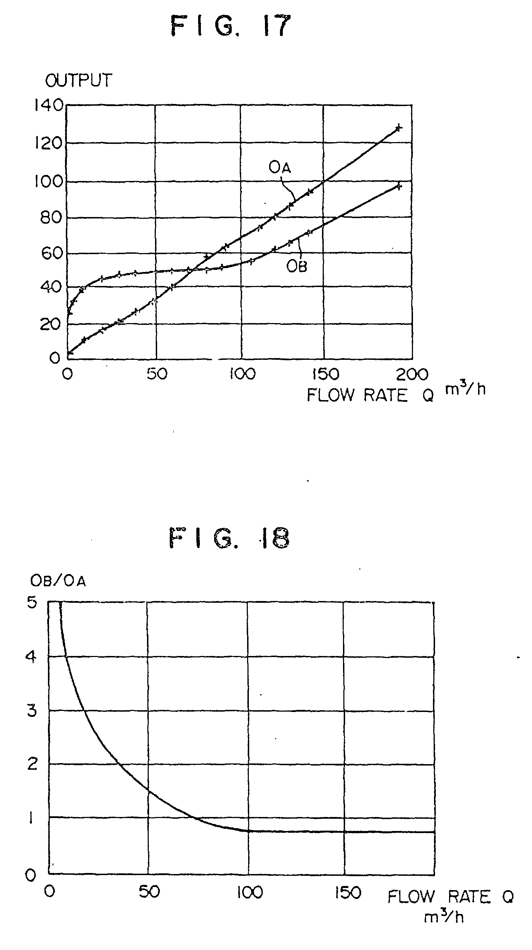

Figure 16 shows a general arrangement of an apparatus employed in the experiments for verifying the measurement accuracy afforded by the above-mentioned measuring method, wherein the flow rate detector 4 described above by reference to Figures 12 and 13 is mounted on a pipe 13 made of vinyl chloride and having an inner diameter of 200 mm and a length of about 8 m. The slope of this vinyl chloride pipe was first set fixedly at 2/1000, and an actual flow rate Q was measured by using the first excitation coil 3A. A relation between this actual flow rate Q and the output OA of the electromagnetic flowmeter is represented by a curve OA in Figure 17. on the other hand, a curve OB represents result of the measurement carried out by using the second excitation coil 3B at the same slope of the pipe.

Ratios OB/OA determined from both data OA and OB shown in Figure 17 are shown in Figure 18. In this figure, the ratio OB/OA remains constant at a minimum value when the flow rate exceeds a value of approximately 100 [m$^3$/hour]. This range represents a so-called completely filled state. In Figure 17, the curves OA and OB constitute line segments of straight lines extending through the origin of the coordinate system in a range where the flow rate Q is greater than about 100 [m$^3$/hour]. As can readily be understood, the above-mentioned range indicates a range in which the electromagnetic flowmeter operates as a so-called conventional full-fluid type electromagnetic flowmeter.

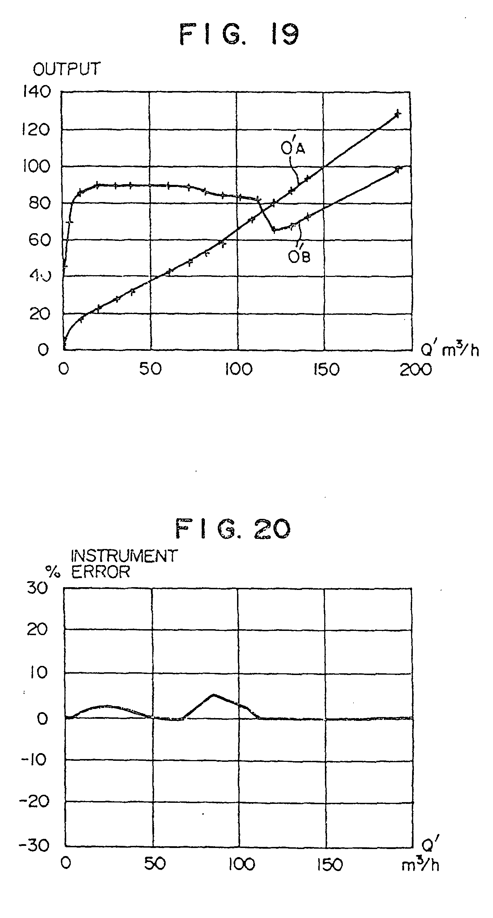

Figure 19 shows relationships between an actual flow rate Q' [m$^3$/hour] measured by using the apparatus shown in Figure 16 and by changing the slope of the flow conduit 13 to 6/1000 and the outputs OA' and OB' obtained by exciting the excitation coils 3A and 3B, respectively. In this experiment, the actual flow shown in Figure 19 is known. However, assuming that the actual flow rate Q' [m$^3$/hour] is unknown, the ratio OB'/OA' = $\alpha$ is determined, which is then followed by determination of the actual flow rate $Q_\alpha$ at a point where value of $\alpha$ coincides with the value of OB/OA in Figure 18. By arithmetically determining the sensitivity $OA_\alpha/Q_\alpha$ at the flow rate $Q_\alpha$ on the basis of the curve OA shown in Figure 17, the unknown flow rate Q' can be determined in accordance with the arithmetic method mentioned previously as follows:

$$Q' = OA' \cdot Q_\alpha/OA_\alpha$$

In this method, instrumentation-ascribable errors were determined at several values of the flow rate Q'. The errors were of relatively small values, as shown in Figure 20. The practicality of this measuring method could thus be verified.

The flow rate measuring method elucidated in the foregoing suffers from a problem that the measurement is accompanied with errors under the influence of conductivity of the fluid to be measured because symmetry is likely to be lost in the positional relationship between the electrodes of the flow rate detector 4 as used and the ground as well as in the relation between the electrode profile and the exciting magnetic flux density distribution.

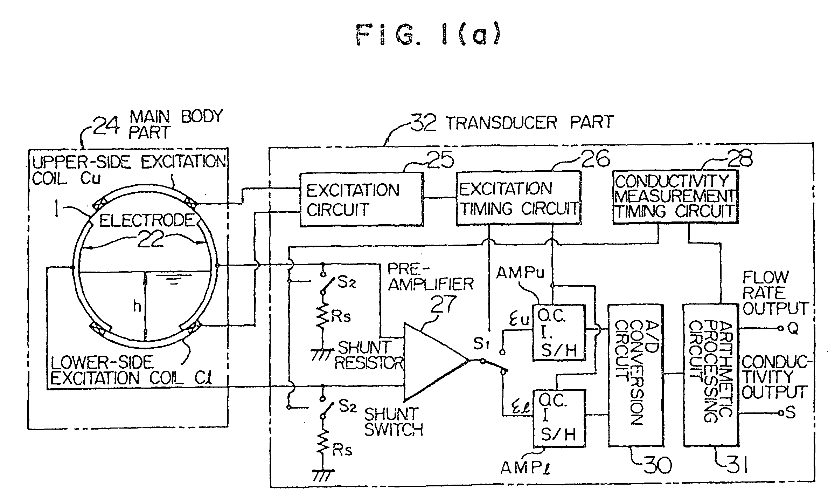

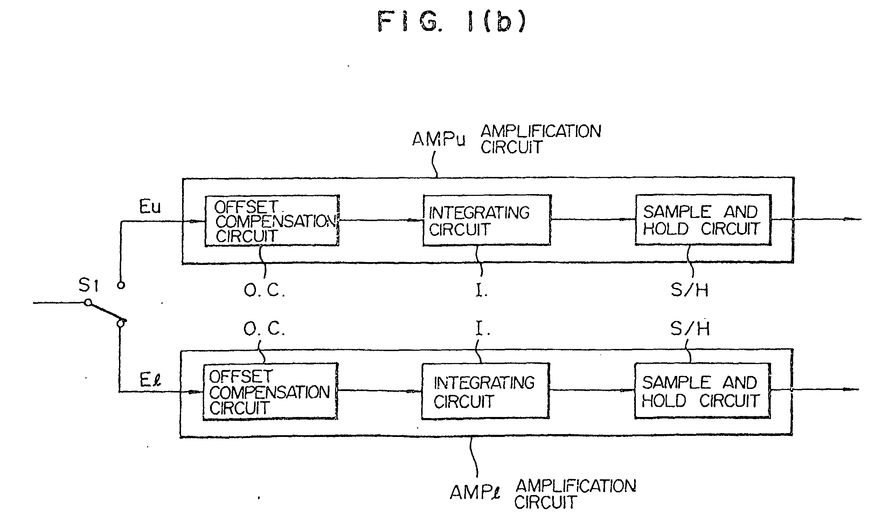

An electromagnetic flowmeter for an unfilled fluid flow conduit including components for conductivity measurement is now to be described with reference to Figs. 1-11, 21, 22, but does not form part of the claimed invention. As shown in Fig 1, it comprises a main body part 24 including an upper-side excitation coil (Cu) and a lower-side excitation coil (Cl) which can be excited separately from each other and a pair of electrodes 22 disposed in opposition to each other, and

a transducer part 32 which includes requirements (a) to (g) mentioned below.

(a) An excitation timing circuit 26 which supplies excitation timing to an excitation circuit 25 and supplies the timing to an amplification circuit (AMP).
(b) A conductivity measurement timing circuit 28 which generates a timing signal for switching on and off a shunt switch $(S_2)$ and simultaneously supplies this timing to an arithmetic processing part 31.
(c) An excitation circuit 25 which receives a signal from the excitation timing circuit 26 for thereby exciting the pair of excitation coils (Cu)(Cl).
(d) A shunt resistor (Rs) for connecting to the ground a conductor extending from the electrodes 22 to a preamplifier 27 and a switch $(S_2)$ for connecting or disconnecting the shunt resistor (Rs) in response to signals supplied from the conductivity measurement timing circuit 28.
(e) A preamplifier 27 for amplifying a signal voltage appearing between the electrodes 22.
(f) An A/D conversion circuit 30 for performing A/D conversion of the output of the amplification circuit (AMP) and the arithmetic processing circuit 31 for processing data supplied from the A/D conversion circuit 30 to thereby output a flow rate output signal are provided.

Alternatively, the arithmetic processing circuit 31 may be so configured as to produce a conductivity output by processing the output from the A/D conversion circuit 30.

Operation will be described by reference to Figure 1 to Figure 5.

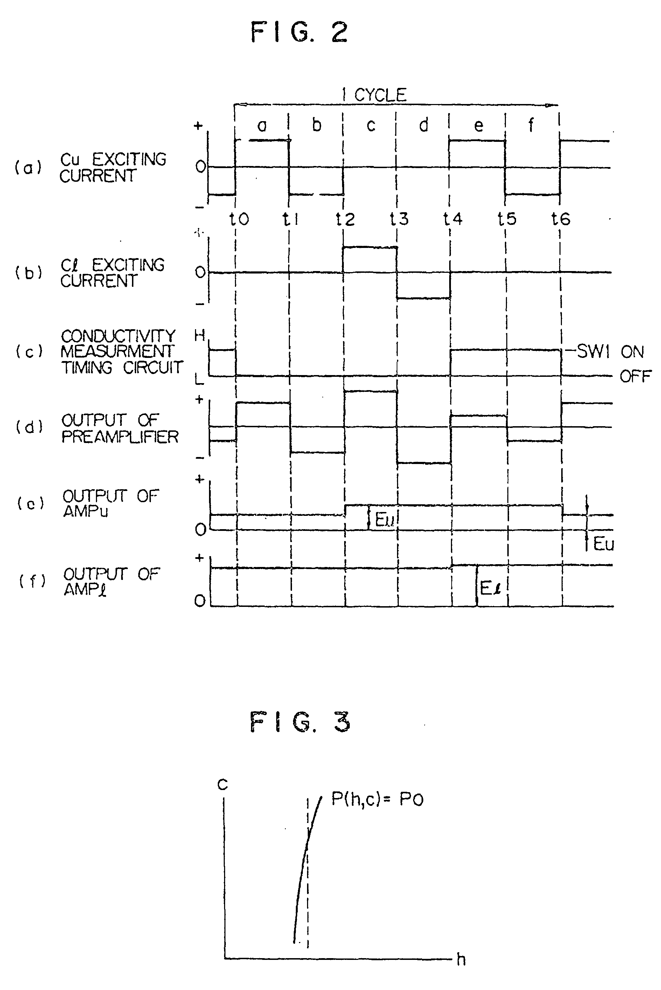

Figure 2 shows a timing chart for one typical cycle of measurement. One measurement cycle illustrated consists of periods a to f. In the first place, description will briefly be made of individual signals.

(i) The upper-side excitation coil Cu is excited during the periods a and b and the periods e and f.
(ii) The lower-side excitation coil Cl is excited during the periods c and d.
(iii) The shunt switch $S_2$ used for measurement of the conductivity is turned on or closed only during the periods e and f.
(iv) Output signals making appearance at the output of the preamplifier 27 depend on difference of the excitation and the positions of the shunt switch $S_2$.
(v) The first amplification circuit AMPu integrates the output of the preamplifier 27 during the period of excitation of the upper-side excitation coil and holds the integrated value for the output upon completion of the integration. Accordingly, the integrated value during the periods a and b is validated at a time point $t_2$, while the integrated value during the periods e and f is validated at a time point $t_6$.

Next, description will turn to procedures for processing the signals as obtained.

1. Three types of data mentioned below are previously acquired by measurement and stored in the arithmetic processing part 31.

① A ratio $g \equiv Q/Eu$ where Eu represents the output of the first amplification circuit AMPu produced when the upper-side coil (or alternatively the lower-side coil) is excited and Q represents an actual flow rate at that time can assume a constant value by determining previously the fluid level h and the conductivity c. This ratio given by g(h, c) is previously acquired.
② A ratio $p \equiv El/Eu$ between the output Eu produced by the first amplification circuit AMPu when the upper-side coil is excited and the output El produced by the second amplification circuit AMPl when the lower-side coil is excited can also assume a constant value for the predetermined values of the fluid level h and the conductivity c. This ratio given by p(h, c) is previously acquired by measurement.
③ A ratio $s \equiv Eu'/Eu$ between the output Eu when the shunt switch $S_2$ is opened and the output Eu' when the shunt switch $S_2$ is closed in the state where the upper-side coil is excited is also determined in dependence on the fluid level h and the conductivity c. This ratio given by s(h, c) is previously determined by measurement.

2. From the signals Eu and El obtained by actual measurement, a ratio $p_0 = El/Eu$ is determined. On the premise that $p(h, c) = p_0$, a curve can be plotted on a h-c plane in a manner as illustrated in Figure 3. Although this curve intrinsically lies on a plane $p = P_0$, a curve obtained through orthogonal projection of this curve onto the h-c plane is used.

The measuring method mentioned in conjunction with the description of the basic technique is based on the presumption that $p_0$ and the fluid level h bear a one-to-one correspondence to each other. In other words, it was regarded that $p_0$ could be represented by a straight line extending parallel to the ordinate, as indicated by a broken line in Figure 3. However, the inventors of the present application have discovered that

$p_0$ is not in one-to-one correspondence with the fluid level $h$, but depends on the conductivity as well, as indicated by a solid line in Figue 3.

3. The inventors of the present application have studied and examined the possibility of processing the output of the upper-side coil and/or the lower-side coil in some way so that the result of the processing can be plotted as a curve on the h-c plane, as in the case of the graph shown in Figure 3. If such curve can be obtained, it is then possible to specify the fluid level $h$ and the conductivity $c$ on the basis of the outputs of the upper and lower coils by determining the intersection of the above-mentioned curve with that of Figure 3. To say in another way, when two equations having two variables $h$ and $c$ can be defined, then the fluid level $h$ can be determined as a solution of the equations. At the same time, the conductivity $c$ can be determined as well.

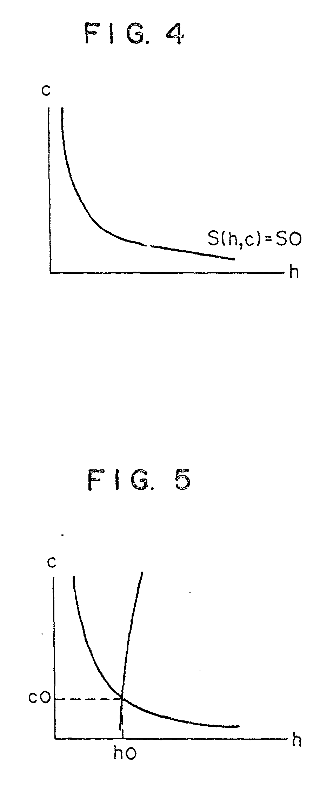

In this conjunction, the inventors of the present application paid attention to the ratio $s \equiv Eu'/Eu$ mentioned previously. By determining $s_0 = Eu'/Eu$ and representing $s_0$ by $s(u, c)$, one curve could be obtained, as shown in Figure 4, by resorting to orthogonal projection to the h-c plane as described previously.

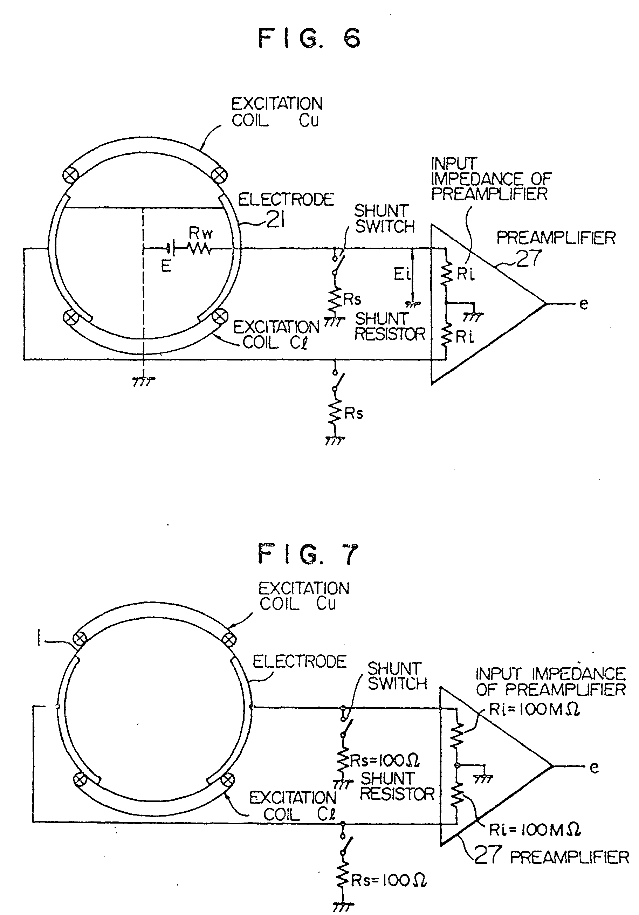

Parenthetically, when the output impedance of the flowmeter main body part 24 which is determined in dependence on the fluid level $h$ within the flow pipe 1 and the conductivity $c$ of the fluid to be measured is represented by Rw, the flow rate signal E generated by the flowmeter undergoes a voltage division due to an output impedance Rw and an input impedance Ri of the preamplifier 27, as shown in Figure 6. However, since it usually holds true that Rw << Ri, it is safe to say that Ei ≒ E.

When the shunt switch $S_2$ is closed,

$$Ei \doteqdot Rs \cdot E / (Rw + Rs)$$

so long as the condition that Rs << Ri is satisfied. Accordingly, from the previously mentioned definition of $s$,

$$s = Rs / (Rw + Rs)$$

Since Rs is known, expression $s(h, c)$ can apply valid in view of Rw(h, c).

4. As described hereinbefore with reference to the basic technique, the actual flow rate was determined on the premise that the fluid level $h$ and the flow rate Q are in a one-to-one correspondence and that $p_0 = El/Eu$ (= OB/OA) bears a one-to-one correspondence to the flow rate Q (and hence the fluid level $h$). However, since $P_0 = p(h, c)$ as elucidated above, the method described in conjunction with the basic technique is not suitable when the measurement is to be carried out with higher accuracy.

Attention turns to the fact that the ratio $g \equiv Q/Eu$ mentioned previously is a function of the fluid level $h$ and the conductivity $c$.

More specifically, since the intersection between the two curves shown in Figures 3 and 4 represents a fluid level $h_0$ and a conductivity $c_0$ in the current state (Figure 5), $g_0$ can be determined from $g = g_0(h_0, c_0)$. By the definition of $g$, the current flow rate $Q_0$ is determined in accordance with $Q_0 = g_0 Eu$.

The parameters $h$ and $c$ which have influence to $g$ may be determined by solving simultaneous equations:

$$s(h, c) = s_0$$

$$p(h, c) = p_0$$

By determining the conductivity C, errors brought about by changes in the conductivity C may be compensated for.

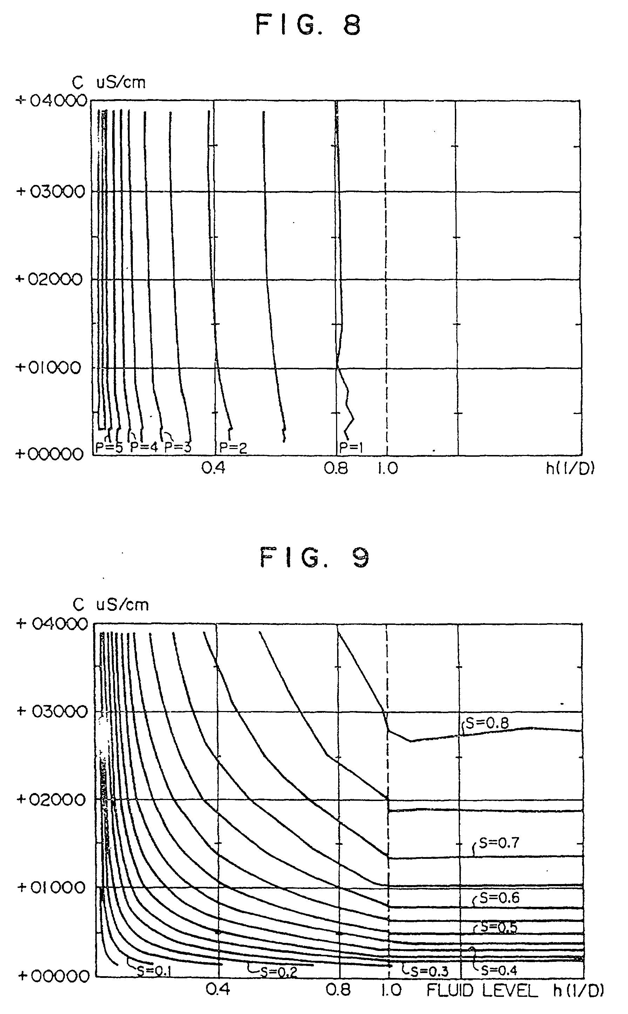

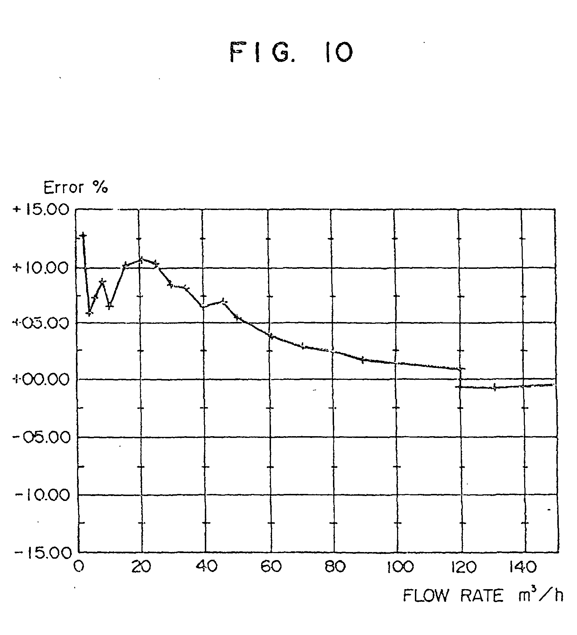

Referring to Figure 7 and assuming that the inner diameter of a flow line or conduit 1 is 200, a shunt resistor Rs is 100 Ω, and that a preamplifier 27 has an input impedance of 100 MΩ, curves corresponding to those shown in Figures 3 and 4 can be plotted as shown in Figures 8 and 9.

In Figure 9, a region where the fluid level $h$ is higher than 1.0 D represents the case in which the fluid is transported under pressure in the filled state of the pipe. This region is plotted only for the purpose of reference.

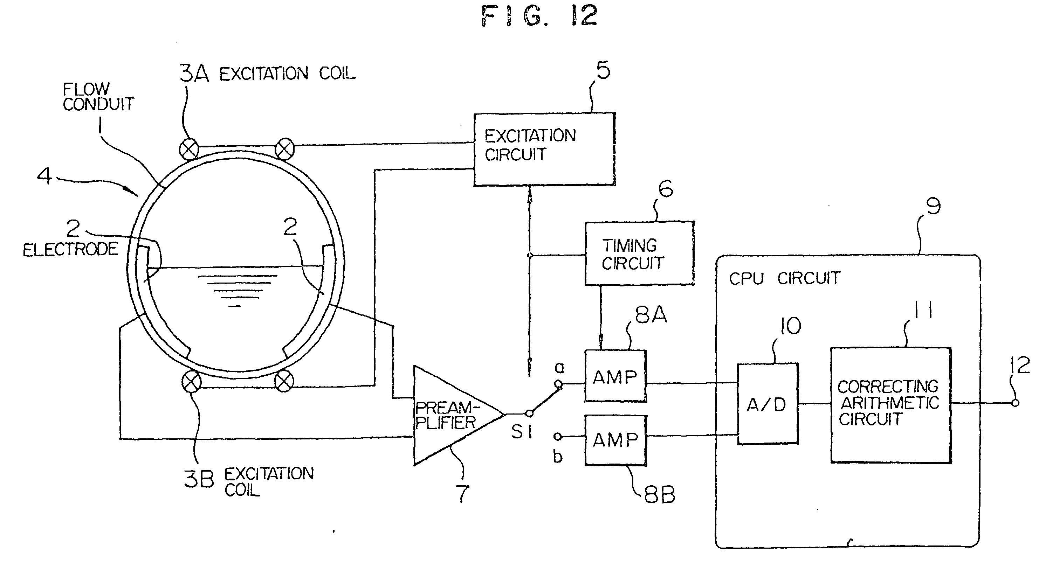

In Figure 11, data resulting from the measurement of a flow rate of a fluid having a conductivity of 1300 μS/cm are illustrated, wherein the actual flow rate is taken along the abscissa while taken along the ordinate are instrumentation-attributable errors (i.e., error = (measured value - true value) / true value $\times$ 100 %)).

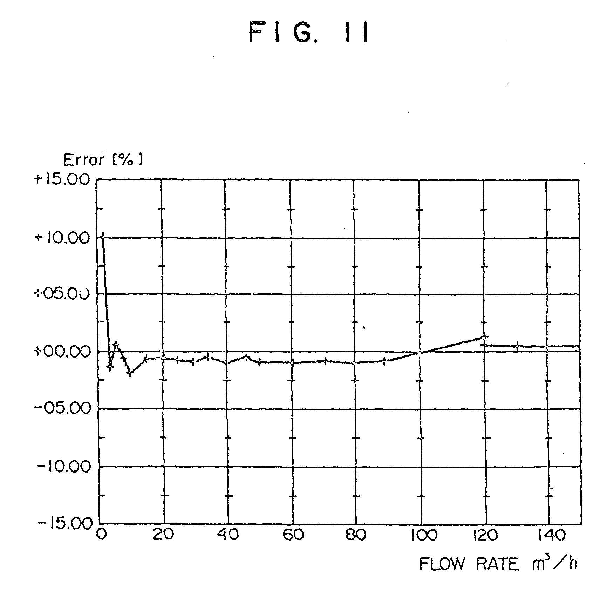

Data shown in Figure 10 are obtained as a result of measurement of the same fluid in accordance with the basic method described hereinbefore.

If the electromagnetic flowmeter for an unfilled fluid flow conduit is implemented in the structure described above, including components for conductivity measurement, adverse influence of change in the conductivity on the measurement accuracy can be corrected or compensated for, whereby measurement error can be minimized.

Further, because requirements imposed in respect of the symmetry of the main body portion can be mitigated, freedom in designing the main body portion of the electromagnetic flowmeter is increased.

Besides, by outputting externally the information of the conductivity, the function of a conductivity measuring apparatus can be realized as well.

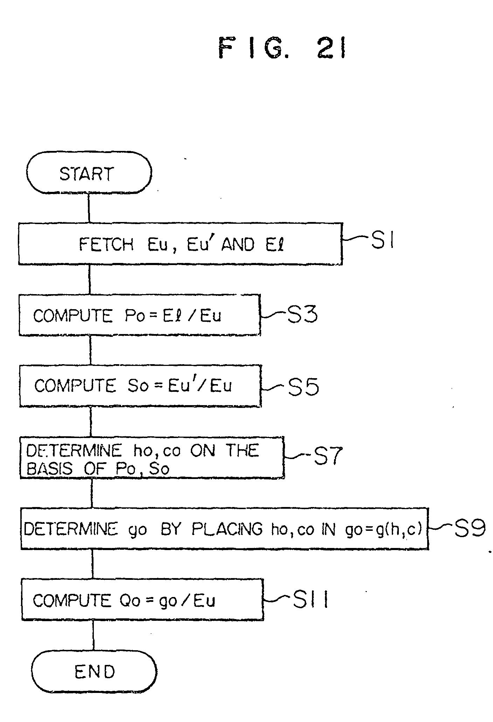

Another measurement method will be described with the aid of a flow chart shown in Figure 21.

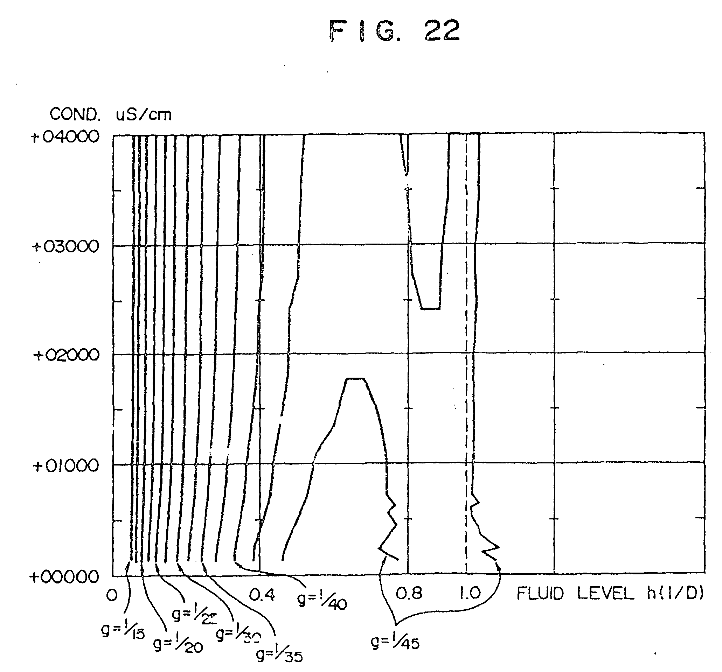

Figure 22 is a view for graphically illustrating relations between the ratio $g \equiv Q/Eu$ and the fluid level $h$ and the conductivity $c$. The relations shown in Figure 22 as well as the relations shown in Figures 8 and 9 are previously stored in a memory incorporated in the arithmetic processing part 31.

In a step S1, the output Eu of the upper-side coil obtained when the shunt switch $S_2$ is opened, the output Eu' of the same coil when the switch $S_2$ is closed and the output El of the lower-side coil are detected and stored in registers incorporated in the arithmetic processing part 31.

In a step S3, an arithmetic circuit of the arithmetic processing part fetches Eu and El from the respective registers to perform a calculation in accordance with $p_0 = El/Eu$, the result of which is stored in another register.

In a step S5, a computation is performed in accordance with $S_0 = El'/Eu$, the result of which is stored in another register.

In a step S7, the value of $p_0$ obtained in the step S3 is compared with the data shown in Figure 8 and stored in the memory, to thereby select one of the data shown in Figure 8 which is closest to $p_0$. On the other hand, the value of $S_0$ obtained in step S5 is compared with the data of Figure 9 stored in the memory, to select one of the data which is closest to $S_0$. On the basis of the intersection between the two data derived in this way, the fluid level $h_0$ and the conductivity $c_0$ at the time of measurement can be determined.

In a step S9, data of Figure 22 stored in the memory are consulted to determine $g_0$ from the fluid level $h_0$ and the conductivity $c_0$ determined in the step 7.

In a step S11, the output Eu of the upper-side coil is read out from the register and is multiplied by the ratio $g_0$ obtained in step S9 to determine arithmetically the actual flow rate $Q_0$.

In the case of the embodiment described above, including components for conductivity measurement, the inner diameter of the pipe is 240 mm. Each of the electrodes 2 has a width of 40 mm in the flow direction and a thickness of 2 mm. Both electrodes are disposed with an intervening angle of 90°.

Configurations and dimensions of the upper-side and lower-side coils are shown in Figure 14.

It should be added that the coils as used are each composed of a winding of 1300 turns.

## Claims

1. An electromagnetic flowmeter for measuring a flow rate of a fluid not completely filling a conduit, comprising:

   coils (3A, 3B) for mounting above and below the conduit (1) each for generating a magnetic field across the conduit (1),
   means (5) for energising either the upper coil (3A) or the lower coil (3B),
   sensor means comprising a pair of electrodes (2) for being so positioned on the conduit (1) as to be capable of sensing an induced voltage across the conduit (1) caused by the passage of fluid in the conduit (1) through the magnetic field and
   processing means (9) capable of:

   receiving signals OA' and OB' from the sensor means positioned on the conduit (1) on energisation of the upper coil (3A) and the lower coil (3B), respectively, for an unknown flow rate Q' of fluid in the conduit (1), determining the value of the signal $OA_\alpha$ from the sensor means and of the flow rate $Q_\alpha$, respectively, for the point $\alpha$ at which the ratio of OB to OA equals the ratio of OB' to OA', where OA and OB represent previously determined corresponding values for the outputs of the sensor means, on energisation of the upper coil (3A) and the lower coil (3B), respectively, when positioned on a reference conduit having a known constant-gradient and the same cross-sectional configuration as the conduit (1), over a range of known flow rates Q of fluid in the reference conduit and
   determining, from OA', $OA_\alpha$ and $Q_\alpha$, the unknown flow rate Q' as equal to OA' . $Q_\alpha/OA_\alpha$.

2. An electromagnetic flowmeter as claimed in claim 1, wherein the processing means includes an analogue-to-digital (AID) converter (10) so positioned as to receive the signals from the sensor means.

3. An electromagnetic flowmeter as claimed in claim 1 or claim 2, wherein the processing means (9) is capable of determining the ratio $OA_\alpha/Q_\alpha$ as a sensitivity value.

4. A flow meter as claimed in any one of claims I to 3, wherein the sensor means includes a pair of electrodes (2) capable of being so positioned on the conduit (1) as to be symmetrically positioned in relation to a centre line of the conduit (1).

5. A flow meter as claimed in any one of claims 1 to 4, wherein the upper coil (3A), the lower coil (3B) and the sensor means comprising a pair of electrodes (2) are mounted on a length of conduit.

6. A method of measuring the flow rate of a fluid not completely filling a conduit using an electromagnetic flowmeter comprising:

   coils (3A, 3B) for mounting above and below the measuring conduit (1) each for generating a magnetic field across the conduit (1),

means (5) for energising either the upper coil (3A) or the lower coil (3B),
sensor means comprising a pair of electrodes (2) capable of being so positioned on the conduit (1) as to sense an induced voltage across the measuring conduit (1) caused by the passage of fluid in the conduit (1) through the magnetic field and
processing means (9) performing the steps of:

receiving signals OA' and OB' from the sensor means positioned on the conduit (1) on energisation of the upper coil (3A) and the lower coil (3B), respectively, for an unknown flow rate Q' of fluid in the conduit (1), determining the value of the signal $OA_\alpha$ from the sensor means and of the flow rate $Q_\alpha$, respectively, for the point $\alpha$ at which the ratio of OB to OA equals the ratio of OB' to OA', where OA and OB represent previously determined corresponding values for the output of the sensor means, on energisation of the upper coil (3A) and the lower coil (3B), respectively, when positioned on a reference conduit having a known constant-gradient and
the same cross-sectional configuration as the conduit (1), over a range of known flow rates Q of fluid in the reference conduit and determining, from OA', $OA_\alpha$ and $Q_\alpha$, the unknown flow rate Q' as equal to OA' . $Q_\alpha$/$OA_\alpha$.

7. A method as claimed in claim 6, wherein the processing means (9) subjects the signals from the sensor means to analogue-to-digital conversion.

8. A method as claimed in claim 6 or claim 7, wherein the processing means (9) determines the ratio $OA_\alpha$/$Q_\alpha$ as a sensitivity value.

**Patentansprüche**

1. Elektromagnetischer Strömungsmesser zum Messen einer Strömungsrate eines eine Leitung nicht vollständig füllenden Fluids, umfassend:

Spulen (3A, 3B) zum Anbringen über und unter der Leitung (1), jede zum Erzeugen eines Magnetfelds quer über die Leitung (1),

ein Mittel (5) zum Erregen entweder der oberen Spule (3A) oder der unteren Spule (3B),

ein Sensormittel, umfassend ein Paar Elektroden (2), um so auf der Leitung (1) positioniert zu werden, dass sie fähig sind, eine induzierte Spannung quer über der Leitung (1), die durch den Durchgang von Fluid in der Leitung (1) durch das Magnetfeld induziert wird, abzufühlen, und

ein Verarbeitungsmittel (9), das fähig ist zum:

Empfangen von Signalen OA' und OB' von dem auf der Leitung (1) positionierten Sensormittel bei Erregung der oberen Spule (3A) bzw. der unteren Spule (3B), für eine unbekannte Strömungsrate Q' des Fluids in der Leitung (1),
Bestimmen des Werts des Signals $OA_\alpha$ von dem Sensormittel bzw. der Strömungsrate $Q_\alpha$ für die Stelle $\alpha$, an welcher das Verhältnis von OB zu OA gleich dem Verhältnis von OB' zu OA' ist, worin OA und OB vorher bestimmte entsprechende Werte für die Ausgangsgrößen des Sensormittels bei Erregung der oberen Spule (3A) bzw. der unteren Spule (3B), wenn es bzw. sie auf einer Bezugsleitung positioniert ist bzw. sind, die einen bekannten konstanten Gradienten und die gleiche Querschnittskonfiguration wie die Leitung (1) hat, über einen Bereich von bekannten Strömungsraten Q in der Bezugsleitung repräsentieren, und
Bestimmen der unbekannten Strömungsrate Q' als gleich OA' · $Q_\alpha$/$OA_\alpha$ aus OA', $OA_\alpha$ und $Q_\alpha$.

2. Elektromagnetischer Strömungsmesser, wie im Anspruch 1 beansprucht, worin das Verarbeitungsmittel einen Analog-zu-Digital-(A/D)-Umsetzer (10) umfasst, der so positioniert ist, dass er die Signale von dem Sensormittel empfängt.

3. Elektromagnetischer Strömungsmesser, wie im Anspruch 1 oder Anspruch 2 beansprucht, worin das Verarbeitungsmittel (9) fähig ist, das Verhältnis $OA_\alpha$/$Q_\alpha$ als einen Empfindlichkeits- bzw. Ansprechempfindlichkeitswert zu bestimmen.

4. Strömungsmesser, wie in irgendeinem der Ansprüche 1 bis 3 beansprucht, worin das Sensormittel ein Paar Elektroden (2) umfasst, die fähig sind, so auf der Leitung (1) positioniert zu werden, dass sie symmetrisch mit Bezug auf eine Mittellinie der Leitung (1) positioniert sind.

5. Strömungsmesser, wie in irgendeinem der Ansprüche 1 bis 4 beansprucht, worin die obere Spule (3A), die untere Spule (3B) und das Sensormittel, das ein Paar Elektroden (2) umfasst, auf einer Länge der Leitung angebracht sind.

**6.** Verfahren zum Messen der Strömungsrate eines eine Leitung nicht vollständig füllenden Fluids unter Verwendung eines elektromagnetischen Strömungsmessers, umfassend:

Spulen (3A, 3B) zum Anbringen über und unter der Messleitung (1), jede zum Erzeugen eines Magnetfelds quer über die Leitung (1),

ein Mittel (5) zum Erregen entweder der oberen Spule (3A) oder der unteren Spule (3B),

ein Sensormittel, umfassend ein Paar Elektroden (2), die fähig sind, so auf der Leitung (1) positioniert zu werden, dass sie eine induzierte Spannung quer über der Leitung (1), die durch den Durchgang von Fluid in der Leitung (1) durch das Magnetfeld induziert wird, abfühlen, und

ein Verarbeitungsmittel (9), das die folgenden Schritte ausführt:

Empfangen von Signalen OA' und OB' von dem auf der Leitung (1) positionierten Sensormittel bei Erregung der oberen Spule (3A) bzw. der unteren Spule (3B), für eine unbekannte Strömungsrate Q' des Fluids in der Leitung (1),

Bestimmen des Werts des Signals $OA_\alpha$ von dem Sensormittel bzw. der Strömungsrate $Q_\alpha$ für die Stelle $\alpha$, an welcher das Verhältnis von OB zu OA gleich dem Verhältnis von OB' zu OA' ist, worin OA und OB vorher bestimmte entsprechende Werte für die Ausgangsgröße des Sensormittels bei Erregung der oberen Spule (3A) bzw. der unteren Spule (3B), wenn es bzw. sie auf einer Bezugsleitung positioniert ist bzw. sind, die einen bekannten konstanten Gradienten und die gleiche Querschnittskonfiguration wie die Leitung (1) hat, über einen Bereich von bekannten Strömungsraten Q des Fluids in der Bezugsleitung repräsentieren, und

Bestimmen der unbekannten Strömungsrate Q' als gleich $OA' \cdot Q_\alpha/OA_\alpha$ aus OA', $OA_\alpha$ und $Q_\alpha$.

**7.** Verfahren, wie im Anspruch 6 beansprucht, worin das Verarbeitungsmittel (9) die Signale von dem Sensormittel einer Analog-zu-Digital-Umsetzung unterwirft.

**8.** Verfahren, wie im Anspruch 6 oder Anspruch 7 beansprucht, worin das Verarbeitungsmittel (9) das Verhältnis $OA_\alpha/Q_\alpha$ als einen Empfindlichkeits- bzw. Ansprechempfindlichkeitswert bestimmt.

**Revendications**

**1.** Débitmètre électromagnétique pour mesurer le débit d'un liquide ne remplissant pas totalement une conduite, comprenant :

des bobines (3A, 3B) destinées à être montées au-dessus et au-dessous de la conduite (1) pour générer chacune un champ magnétique au travers de la conduite (1),
des moyens (5) pour exciter soit la bobine supérieure (3A), soit la bobine inférieure (3B),
des moyens de détection comprenant un couple d'électrodes (2) disposées sur la conduite (1) de manière à être susceptibles de détecter une tension induite au travers de la conduite (1) provoquée par le passage d'un liquide dans la conduite (1) au travers d'un champ magnétique, et
des moyens de traitement (9) aptes à :

recevoir des signaux OA' et OB' provenant des moyens de détection placés sur la conduite (1) lors de l'excitation de la bobine supérieure (3A) et de la bobine inférieure (3B), respectivement, pour un débit inconnu Q' de liquide dans la conduite (1),
déterminer la valeur du signal $OA_\alpha$ provenant des moyens de détection et le débit $Q_\alpha$, respectivement pour le point pour lequel le rapport de OB à OA est égal au rapport de OB' à OA', où OA et OB représentent des valeurs correspondantes déterminées antérieurement pour les sorties des moyens de détection, lors de l'excitation de la bobine supérieure (3A) et de la bobine inférieure (3B), respectivement, lors de leur mise en place sur une conduite de référence présentant une pente constante connue et la même configuration transversale que la conduite (1) pour une gamme de débits Q connus de liquide dans la conduite de référence et,
déterminer, à partir de OA', $OA_\alpha$ et $Q_\alpha$ le débit inconnu Q' comme étant égal à OA'x $Q_\alpha/OA_\alpha$.

**2.** Débit mètre électromagnétique selon la revendication 1, dans lequel les moyens de traitement comprennent un convertisseur (10) analogue à numérique (A/D) placé de manière à recevoir les signaux provenant des moyens de détection.

**3.** Débitmètre électromagnétique selon l'une quelconque des revendications 1 ou 2, dans lequel les moyens de traitement (9) sont capables de déterminer le rapport 0A /Q en tant que valeur de sensibilité.

**4.** Débitmètre selon d'une quelconque des revendications 1 à 3, dans lequel les moyens de détection comprennent un couple d'électrodes (2) susceptibles d'être placées sur une conduite (1) de manière à être situées symétriquement par rapport à l'axe médian de la conduite (1).

**5.** Débitmètre selon l'une quelconque des revendications 1 à 4, dans lequel la bobine supérieure (3A), la bobine inférieure (3B) et les moyens de détection comprenant un couple d'électrodes (2) sont montés sur une longueur de conduite.

**6.** Procédé de mesure de débit d'un liquide ne remplissant pas totalement une conduite, utilisant un débitmètre électromagnétique comprenant :

des bobines (3A, 3B) destinées à être montées au-dessus et au-dessous de la conduite (1) pour générer chacune un champ magnétique au travers de la conduite (1),
des moyens (5) pour exciter soit la bobine supérieure (3A), soit la bobine inférieure (3B),
des moyens de détection comprenant un couple d'électrodes (2) susceptibles d'être disposées sur la conduite (1) de manière à détecter une tension induite au travers de la conduite (1) provoquée par le passage d'un liquide dans la conduite (1) au travers du champ magnétique, et
des moyens de traitement (9) réalisant les étapes consistant à :

recevoir des signaux OA' et OB' provenant des moyens de détection placés sur la conduite (1) lors de l'excitation de la bobine supérieure (3A) et de la bobine inférieure (3B), respectivement, pour un débit inconnu Q de liquide dans la conduite (1), déterminer la valeur du signal $OA_\alpha$ provenant des moyens de détection et le débit $Q_\alpha$, respectivement, pour le point pour lequel le rapport de OB à OA est égal au rapport de OB' à OA', où OA et OB représentent des valeurs correspondantes déterminées antérieurement pour la sortie des moyens de détection, lors de l'excitation de la bobine supérieure (3A) et de la bobine inférieure (3B), respectivement, lors de leur mise en place sur une conduite de référence présentant une pente constante connue et la même configuration transversale que la conduite (1) pour une gamme de débits Q connus de liquide dans la conduite de référence et, déterminer à partir de OA', $OA_\alpha$ et $Q_\alpha$ le débit inconnu Q' comme étant égal à OA'x $Q_\alpha/OA_\alpha$.

**7.** Procédé selon la revendication 6, dans lequel les moyens de traitement (9) soumettent les signaux provenant des moyens de détection à une conversion analogue à numérique.

**8.** Procédé selon l'une quelconque des revendications 6 ou 7, dans lequel les moyens de traitement (9) déterminent le rapport OA /Q en tant que valeur de sensibilité.

# FIG. 1(a)

24 MAIN BODY PART

32 TRANSDUCER PART

UPPER-SIDE EXCITATION COIL Cu

ELECTRODE 22

I

h

LOWER-SIDE EXCITATION COIL Cl

25 EXCITATION CIRCUIT

26 EXCITATION TIMING CIRCUIT

28 CONDUCTIVITY MEASUREMENT TIMING CIRCUIT

$S_2$

Rs

SHUNT RESISTOR

PRE-AMPLIFIER 27

$S_1$

$S_2$

Rs

SHUNT SWITCH

AMPu

$E_u$ O.C.I. S/H

$E_l$ O.C.I. S/H

AMPl

A/D CONVERSION CIRCUIT 30

ARITHMETIC PROCESSING CIRCUIT 31

FLOW RATE OUTPUT Q

CONDUCTIVITY OUTPUT S

# FIG. 1(b)

AMPu AMPLIFICATION CIRCUIT

Eu

| OFFSET COMPENSATION CIRCUIT | INTEGRATING CIRCUIT | SAMPLE AND HOLD CIRCUIT |

O. C.          I.          S/H

S1

O. C.          I.          S/H

Eℓ

| OFFSET COMPENSATION CIRCUIT | INTEGRATING CIRCUIT | SAMPLE AND HOLD CIRCUIT |

AMPℓ AMPLIFICATION CIRCUIT

EP 0 704 682 B1

EP 0 704 682 B1

# FIG. 2

(a) Cu EXCITING CURRENT

(b) Cℓ EXCITING CURRENT

(c) CONDUCTIVITY MEASURMENT TIMING CIRCUIT

(d) OUTPUT OF PREAMPLIFIER

(e) OUTPUT OF AMPu

(f) OUTPUT OF AMPℓ

1 CYCLE

SW1 ON / OFF

# FIG. 3

$P(h,c) = Po$

# F I G. 4

$S(h,c) = SO$

# F I G. 5

# F I G. 6

EXCITATION
COIL   Cu

ELECTRODE
21

SHUNT
SWITCH

INPUT
IMPEDANCE OF
PREAMPLIFIER

PREAMPLIFIER
27

Rw

E

Ei

Ri

Rs

SHUNT
RESISTOR

Ri

e

EXCITATION
COIL Cℓ

Rs

# F I G. 7

EXCITATION
COIL   Cu

I

ELECTRODE

SHUNT
SWITCH

INPUT  IMPEDANCE
OF PREAMPLIFIER
Ri=100MΩ

e

Rs=100Ω
SHUNT
RESISTOR

EXCITATION
COIL  Cℓ

Ri=100MΩ

27 PREAMPLIFIER

Rs=100Ω

# FIG. 8

# FIG. 9

# F I G. IO

# F I G.  I I

# FIG. 12

EP 0 704 682 B1

# F I G. 13(a)

EXCITATION COIL
FLOW CONDUIT
3A
4
A
3B EXCITATION COIL
A'

# F I G. 13(b)

EXCITATION COIL
3A
4
3A
I FLOW CONDUIT
2
3B EXCITATION COIL
3B
2 ELECTRODE

FIG. 14

TIMING CIRCUIT

EXCITING CURRENT 3A

EXCITING CURRENT 3B

CHANGE-OVER          POSITION a
SWITCH               POSITION b

OUTPUT OF
PREAMPLIFIER 7

INPUT TO AMPa

INPUT TO AMPb

FIG. 15(a)

FIG. 15(b)

FIG. 15(c)

FIG. 15(d)

# FIG. 16

BUFFER
TANK

4

13

FLOW REGULATING
VALVE

MASTER METER

PUMP

FROM PIT

TO PIT

EP 0 704 682 B1

# F I G. 17

OUTPUT vs FLOW RATE Q m³/h, curves OA and OB

# F I G. 18

OB/OA vs FLOW RATE Q m³/h

EP 0 704 682 B1

# F I G. 19

# F I G. 20

# F I G. 21

```
              ┌─────────────┐
              │    START    │
              └─────────────┘
                     │
      ┌──────────────────────────────┐
      │   FETCH Eu, Eu' AND El        │──── S1
      └──────────────────────────────┘
                     │
      ┌──────────────────────┐
      │  COMPUTE Po = El / Eu │──── S3
      └──────────────────────┘
                     │
      ┌──────────────────────┐
      │  COMPUTE So = Eu'/ Eu │──── S5
      └──────────────────────┘
                     │
      ┌──────────────────────────┐
      │ DETERMINE ho,co ON THE    │──── S7
      │ BASIS OF Po, So           │
      └──────────────────────────┘
                     │
      ┌──────────────────────────────────────────┐
      │ DETERMINE go BY PLACING ho,co IN go=g(h,c) │──── S9
      └──────────────────────────────────────────┘
                     │
      ┌──────────────────────┐
      │  COMPUTE Qo = go / Eu  │──── S11
      └──────────────────────┘
                     │
              ┌─────────────┐
              │     END     │
              └─────────────┘
```

# F I G. 22

COND. uS/cm

+04000

+03000

+02000

+01000

+00000

0
0.4
0.8
1.0
FLUID LEVEL h(1/D)

g=1/15
g=1/20
g=1/2⁻
g=1/3⁻
g=1/35
g=1/40
g=1/45

EP 0 704 682 B1